# EUROPÄISCHE PATENTANMELDUNG

(11) **EP 1 658 924 A1**
(43) Veröffentlichungstag der Anmeldung: **24.05.2006**
(21) Anmeldenummer: 04027671.9
(22) Anmeldetag: 22.11.2004
(51) Int. Cl.: B23P 6/04, F01D 5/00

(54) **Bauteil mit einer aufgefüllten Vertiefung**

(71) Anmelder: SIEMENS AKTIENGESELLSCHAFT, 80333 München (DE)
(72) Erfinder: Ahmad, Fathi, 41564 Kaarst (DE); Dankert, Michael, Dr., 63069 Offenbach (DE); Pan, Ying, Dr., 45219 Essen (DE); Teteruk, Rostislav, Dr., 45468 Mülheim (DE)

(57) **Zusammenfassung**

Bauteile nach dem Stand der Technik, die einen Riss aufweisen, werden repariert, wobei die dabei entstandene längliche Vertiefung (7) mit einem Lot aufgefüllt wird, die aber eine Schwachstelle bildet.

Das erfindungsgemäße Bauteil (1) weist zusätzlich zur aufgefüllten Vertiefung (7) eine aufgefüllte Zusatzvertiefung (13) auf, die quer zu einer Längsrichtung (10) der Vertiefung (7) verläuft.

## Beschreibung

Die Erfindung betrifft ein Bauteil mit einer aufgefüllten Vertiefung gemäß Gattungsbegriff des Anspruchs 1.

Bauteile weisen manchmal nach der Herstellung oder oft nach längerem Einsatz Risse auf.
Diese Risse werden bewertet und je nach Bewertung kann das Bauteil eingesetzt bzw. wieder verwendet oder als unbrauchbar ausgesondert werden.
Wenn die Risslänge bzw. die Fehlergröße überkritisch ist, wird Material um den Riss herum herausgearbeitet und die dabei entstehende Vertiefung wird mit einem Lot aufgefüllt. Jedoch kann sich im betrieblichen Einsatz, insbesondere weil das Lot schlechtere thermomechanische Eigenschaften als das ursprüngliche Material aufweist, an dieser Stelle wieder ein Riss bilden und zum Versagen des Bauteils führen, insbesondere in kürzerer Zeit, da der Riss durch das schwächere Material schneller wachsen kann als bei der ersten Rissbildung.

Es ist daher Aufgabe der Erfindung ein Bauteil aufzuzeigen, das diesen Nachteil überwindet.

Die Aufgabe wird gelöst durch ein Bauteil gemäß Anspruch 1. In den Unteransprüchen sind weitere vorteilhafte Ausgestaltungen des Bauteils aufgelistet, die in beliebiger Art und Weise vorteilhafterweise miteinander kombiniert werden können.

Die Idee der Erfindung besteht unter anderem darin, dass nicht nur in einer Verlaufsrichtung um den länglichen Riss z.B. durch Ausfräsen Material herausgearbeitet wird, sondern auch in einer Richtung quer zum Riss, in der der Riss nicht verlief.

Es zeigen
- Figur 1: ein Bauteil mit einem Riss,
- Figur 2: ein repariertes Bauteil nach dem Stand der Technik,
- Figur 3 bis 16: Ausführungsbeispiele des erfindungsgemäßen Bauteils,
- Figur 17: eine Turbinenschaufel,
- Figur 18: eine Brennkammer
- Figur 19: eine Turbine.

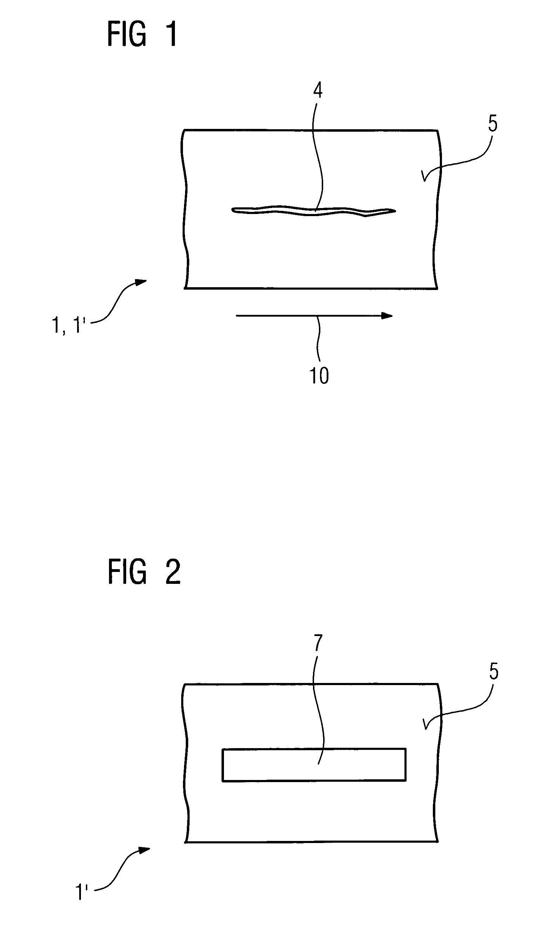

Figur 1 zeigt ein Bauteil 1, 1' mit einer Oberfläche 5, in der oder unterhalb der ein Riss 4 in einer Verlaufsrichtung 10 verläuft.

Figur 2 zeigt ein Bauteil 1' nach dem Stand der Technik, das repariert worden ist.
Ausgehend von Figur 1 wird Material entlang der Risserstreckung beiderseits um den Riss 4 herausgearbeitet, sodass eine längliche Vertiefung 7 entsteht, die den ursprünglichen Riss gänzlich umschließt und danach mit einem Material (beispielsweise Lot) aufgefüllt wird, das sich beispielsweise von dem Material des Bauteils 1 unterscheidet.
Ebenso wie der Riss 4 weist die Vertiefung 7 eine längliche Form (rechteckförmig) in Verlaufsrichtung 10 auf.

Alternativ kann die Vertiefung 7 aber auch bereits beim Herstellen des Bauteils entstanden sein, wie es z.B. beim Gießen von Bauteilen üblich ist, bei denen eine Vertiefung 7 im Bauteil dort vorhanden ist, wo eine Stütze in der Gussform vorhanden war, d.h. also die Vertiefung 7 in dem Bauteil muss nicht zwingend an einer Stelle angeordnet sein, wo vorher ein Riss war.

Das Bauteil 1 weist ein erstes Material auf, das dem zweiten Material in der Vertiefung 7 gleicht oder artähnlich ist (beispielsweise beim Schweißen) oder von diesem verschieden (beispielsweise beim Löten) ist.

Das zweite Material weist beispielsweise durch eine andere Mikrostruktur schlechtere thermomechanische Eigenschaften auf als das Bauteil, das beispielsweise DS- oder SX-Struktur aufweist. Beim Löten oder Schweißen oder artgleichem Schweißen werden andere Mikrostrukturen erzeugt.

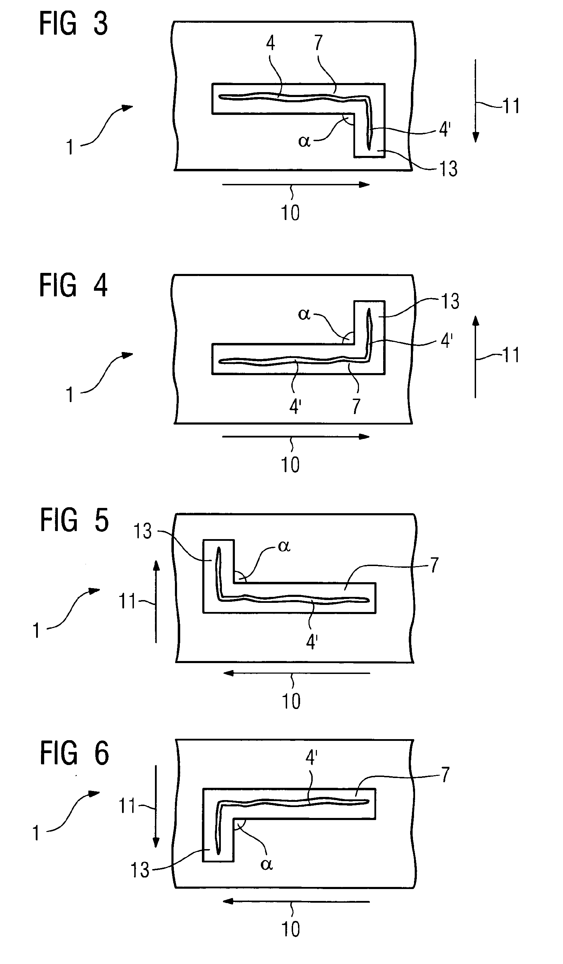

Die Figuren 3 bis 6 zeigen Ausführungsbeispiele des erfindungsgemäßen Bauteils 1.
Die Vertiefung 7 verläuft nicht nur in Verlaufsrichtung 10, sondern auch in einer Querrichtung 11 quer zur Richtung 10 und weist im Gegensatz zu Figur 2 im Grundriss keine Rechteckform, sondern eine L-Form auf. Der zusätzliche, quer verlaufende Teil der Vertiefung 7, die Zusatzvertiefung 13, ist hier beispielsweise ebenfalls rechteckig ausgeführt.

Sowohl der ursprüngliche Teil der Vertiefung 7 nach dem Stand der Technik als auch die Zusatzvertiefung 13 können statt rechteckig auch rund ausgeführt sein. So kann beispielsweise der ursprüngliche Teil der Vertiefung 7 nach dem Stand der im Grundriss Technik eine lang gestreckte Ovalform aufweisen.

Die Zusatzvertiefung 13 kann sich in einem Winkel α von > 0° bis < 180° gegenüber der Verlaufsrichtung 10 erstrecken. Vorzugsweise beträgt α ≥ 45°, ≥ 60°, ≥ 75° oder 90°.

Die L-Form kann in jeder beliebigen Orientierung in dem Bauteil 1 vorhanden sein (Fig. 3 - 6).
Die Vertiefung 7 wird dann beispielsweise mit einem Lot aufgefüllt oder mit einem zweiten Material zugeschweißt. Dieses Material unterscheidet sich in der Regel von dem Material des Bauteils 1 (Superlegierung, insbesondere nickel-, kobalt- oder eisenbasiert), weist aber auf jeden Fall schlechtere thermomechanische Eigenschaften auf als der Grundwerkstoff des Bauteils 1.
Sollte in der aufgefüllten Vertiefung 7 erstmals oder wiederholt ein Riss 4' entstehen, so wird er in die Zusatzvertiefung 13 umgelenkt (Fig. 3 - 6) und steht damit ungünstig zur Spannung, die an dem Bauteil 1 anliegt, sodass der Riss 4' nicht mehr weiter wächst. Die quer verlaufende Zusatzvertiefung 13 besitzt somit die Funktion eines Rissstoppers, das die die Rissausbreitung in eine Richtung umlenken kann, für die die anliegenden mechanischen Spannungen eine unkritische Größe haben.

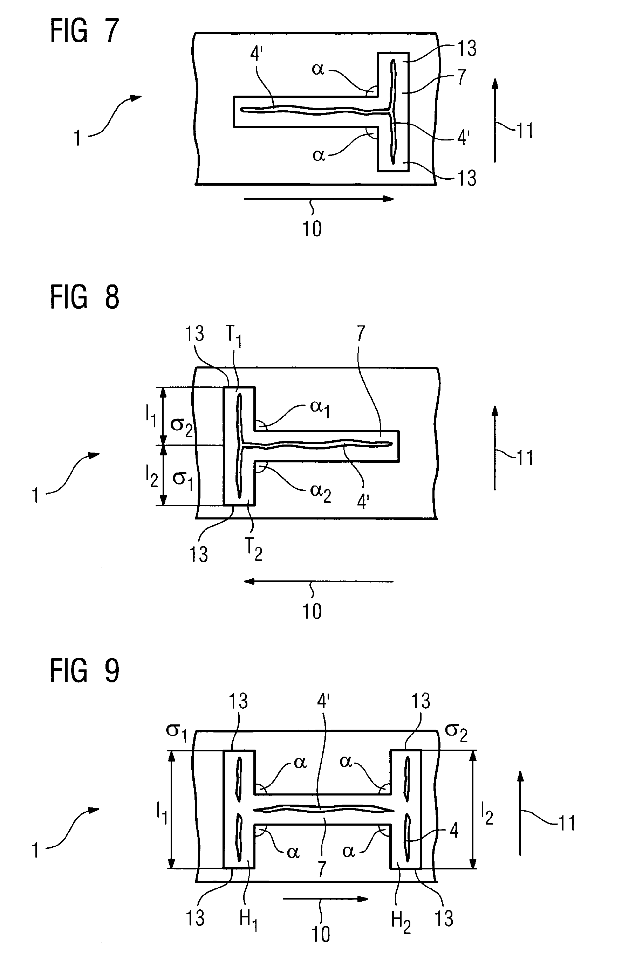

In Figur 7, 8 ist die Vertiefung 7 T-förmig ausgebildet. Sollte wieder ein Riss 4' in der Vertiefung 7 längs zur Richtung 10 entstehen, so wird er nach links und/oder rechts in Querrichtung 11 umgelenkt.

In Figur 8 ist eine weitere vorteilhafte Ausgestaltung der Erfindung dargestellt.

Die T-Form weist einen ersten T-Bereich T₁ auf, der in Querrichtung 11 verläuft, und einen zweiten T-Bereich T₂, der entgegen der Querrichtung 11 verläuft. Die entsprechenden Längen l₁, l₂ der Bereiche T₁, T₂ können gleichlang ausgebildet sein.

Wenn aber in den Bereichen T₁, T₂ im betrieblichen Einsatz des Bauteils 1 verschiedene Spannungen σ₁, σ₂ anliegen, wird vorteilhaft die Länge l₂ entsprechend länger ausgebildet als die Länge l₁, wenn die Spannung σ₂ größer als σ₁ ist.

Figur 9 zeigt eine H-Form der Vertiefung 7 als eine weitere besonders vorteilhafte Ausbildung der Erfindung.

Die H-Form weist in Querrichtung 11 einen ersten und einen zweiten H-Bereich H₁ bzw. H₂ mit den entsprechenden Längen l₁, l₂ auf.
Die Längen l₁, l₂ können gleich sein.
Wenn in Verlaufrichtung 10 gesehen in dem Bereich H₁ eine größere Spannung σ₁ anliegt als die Spannung σ₂ in dem Bereich H₂, so ist die Länge l₁ vorteilhaft entsprechend länger ausgebildet als die Länge l₂ des Bereichs H₂.

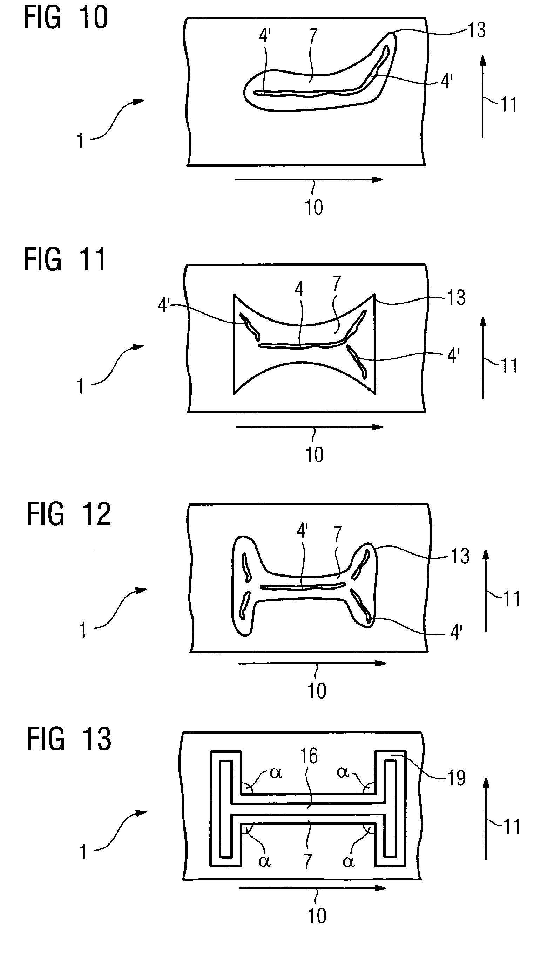

Die Zusatzvertiefung 13 kann statt geradlinig abgewinkelt auch bogenförmig gekrümmt zur Richtung 10 verlaufen und am Ende spitz zulaufen oder abgerundet sind, wie es in Figur 10 gezeigt ist.

Eine solche Zusatzvertiefung 13 kann für die L-Form (Fig. 10), T-Form oder H-Form (Fig. 11) ausgebildet werden.

Ebenso kann die H-Form in ihrer Kontur in den Eckbereichen abgerundet sein, so dass sie die Form eines Knochens aufweist (Fig. 12). Figur 13 zeigt ein weiteres erfindungsgemäßes Ausführungsbeispiel des Bauteils 1.

In diesem Beispiel ist die Vertiefung 7 (hier exemplarisch in Form eines H) mit einem Einsatz 16 und einem Lot 19 aufgefüllt. Der Einsatz 16 weist insbesondere die Kontur der Vertiefung 7 auf und besteht beispielsweise aus demselben Material wie das Bauteil 1 und wird von dem Lot 19 der Vertiefung 7 gehalten oder ist mit dem Bauteil 1 verschweißt.

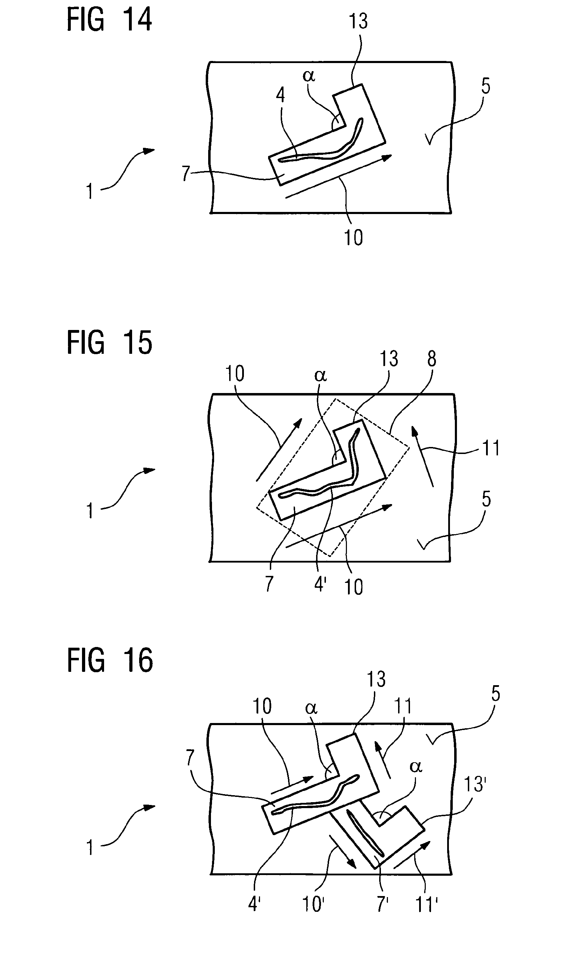

Die Vertiefung 7 wird insbesondere so ausgebildet, dass sie den gesamten Riss 4 erfasst, auch wenn dieser Riss 4 nicht immer geradlinig in Verlaufsrichtung 10 verläuft (Fig. 14). Dabei kann es nach dem Stand der Technik zu einer sehr breiten Vertiefung 8 (Fig. 15: gestrichelt angedeutet) kommen, wenn der Riss 4 sich nicht nur in einer Verlaufsrichtung 10, sondern auch quer zu der Verlaufsrichtung 10 ausbreitet. Erfindungsgemäß wird die Vertiefung 7 mit der Zusatzvertiefung 13 wiederum beispielsweise L-förmig ausgebildet, wobei die L-Form so zu dem Riss 4 gedreht wird, dass gegenüber der Vertiefung 8 nach dem Stand der Technik erheblich weniger Material abgetragen werden muss (Fig. 15).

Das Bauteil 1 kann natürlich mehrere Risse 4 an brüchigen Stellen aufweisen, die sich in verschiedenen Verlaufsrichtungen 10, 10' ausbreiten (Fig. 16). Dabei wird jeweils eine erfindungsgemäße Vertiefung 7, 7' mit der Zusatzvertiefung 13, 13' ausgebildet.
Ebenso kann es aber sein, dass ein Riss 4 sich beispielsweise aufgabelt hat, wie es in Figur 16 dargestellt ist.
Dabei kann beispielsweise bei dem, in Figur 16 dargestellten, Rissverlauf wiederum eine L-Form dem Riss angepasst werden oder es werden zwei L-Formen verwendet, die sich den zwei verschiedenen Risszweigen anpassen, wobei sich die zwei Vertiefungen 7 und 7' beispielsweise auch berühren oder teilweise überdecken.

Das Bauteil 1 kann eine Turbinenschaufel 120, 130 einer Turbine, beispielsweise einer Dampfturbine oder einer Gasturbine 100 für ein Kraftwerk oder eines Flugzeugs sein sowie ein Hitzeschildelement 155.

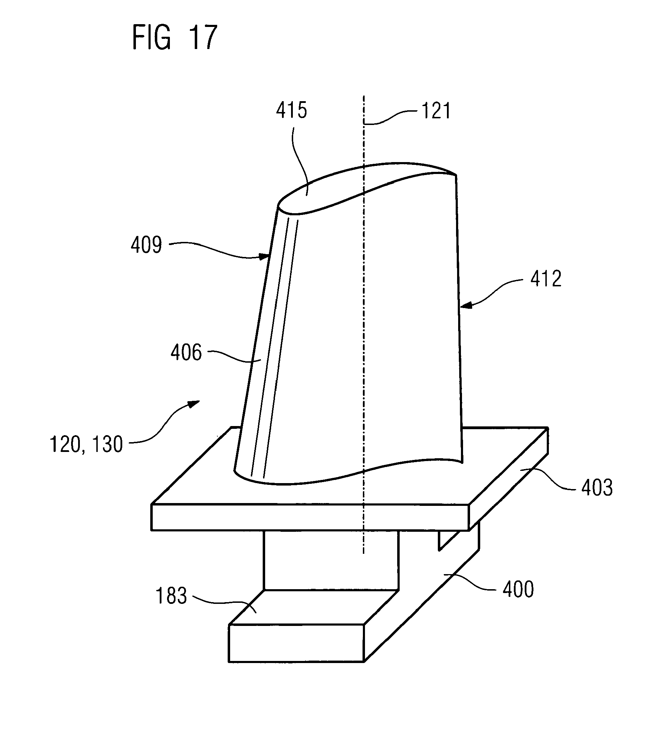

Figur 17 zeigt in perspektivischer Ansicht eine Schaufel 120, 130, die sich entlang einer Längsachse 121 erstreckt.

Die Schaufel 120 kann eine Laufschaufel 120 oder Leitschaufel 130 einer Strömungsmaschine sein. Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist bspw. als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 bspw. massive metallische Werkstoffe verwendet.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 Al bekannt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130, wie in den Figuren 3 - 13 beschrieben, repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher (nicht dargestellt) auf.

Als Schutz gegen Korrosion weist die Schaufel 120, 130 bspw. entsprechende meistens metallische Beschichtungen auf und als Schutz gegen Wärme meistens noch eine keramische Beschichtung.

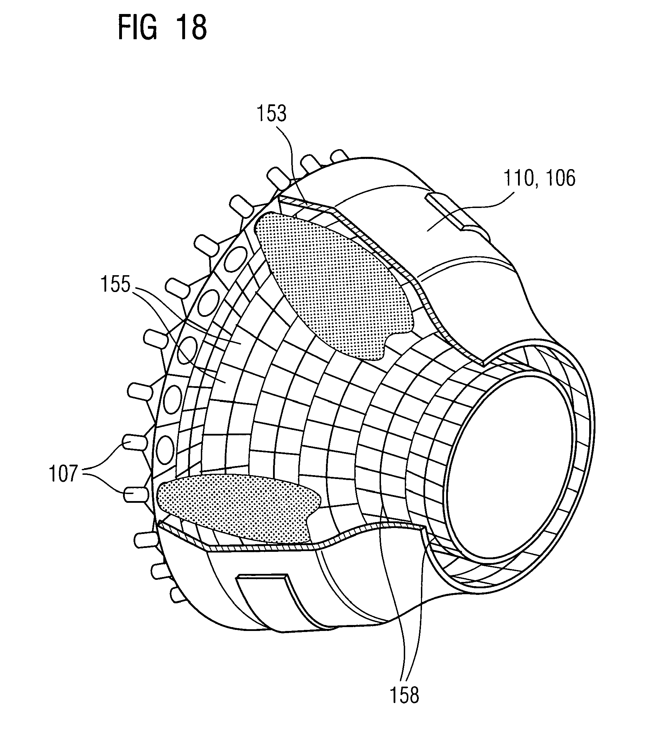

Die Figur 18 zeigt eine Brennkammer 110 einer Gasturbine 100. Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 (als weiteres Beispiel für ein Bauteil 1) gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.

Die Materialien der Brennkammerwand und deren Beschichtungen können ähnlich der Turbinenschaufeln sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

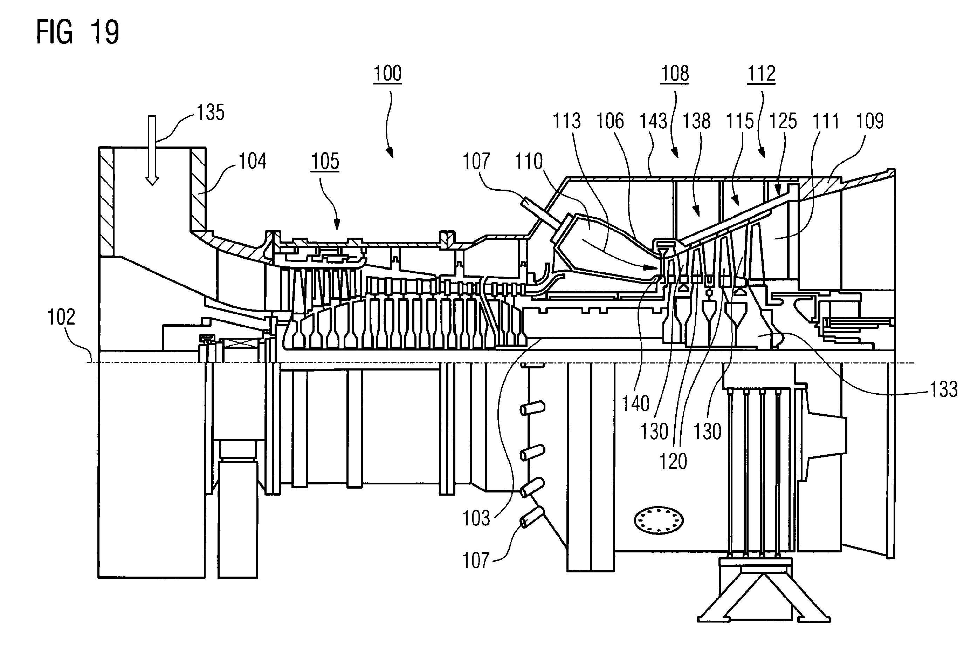

Die Figur 19 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist bspw. aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 bspw. mittels einer Turbinenscheibe 133 am Rotor 103 angebracht sind.
An dem Rotor 103 angekoppelt ist ein Generator oder eine Arbeitsmaschine (nicht dargestellt).
Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden bspw. eisen-, nickel- oder kobaltbasierte Superlegierungen verwendet.
Solche Superlegierungen sind bspw. aus der EP 1204776, EP 1306454, EP 1319729, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden) und Wärme durch eine Wärmedämmschicht aufweisen.
Die Wärmedämmschicht besteht beispielsweise ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Bauteil (1) aus einem ersten Material mit zumindest einer länglichen Vertiefung (7, 7'),
die in zumindest einer Verlaufsrichtung (10, 10') verläuft und die (7, 7') mit einem zweiten Material gefüllt ist,
**dadurch gekennzeichnet, dass**
die Vertiefung (7, 7') in Form einer Zusatzvertiefung (13, 13') auch quer (11, 11'), insbesondere senkrecht,
zur Verlaufsrichtung (10, 10') verläuft.

2. Bauteil nach Anspruch 1,
**dadurch gekennzeichnet, dass**
die Vertiefung (7, 7') eine L-Form aufweist.

3. Bauteil nach Anspruch 1,
**dadurch gekennzeichnet, dass**
die Vertiefung (7, 7') eine T-Form aufweist.

4. Bauteil nach Anspruch 1,
**dadurch gekennzeichnet, dass**
die Vertiefung (7, 7') eine H-Form aufweist.

5. Bauteil nach Anspruch 1,
**dadurch gekennzeichnet, dass**
die Zusatzvertiefung (13, 13') einen Winkel (α) von mindestens 45° zur Verlaufsrichtung (10, 10') aufweist.

6. Bauteil nach Anspruch 5,
**dadurch gekennzeichnet, dass**
der Winkel (α) mindestens 60° beträgt.

7. Bauteil nach Anspruch 5,
**dadurch gekennzeichnet, dass**
der Winkel (α) mindestens 75° beträgt.

8. Bauteil nach Anspruch 5,
**dadurch gekennzeichnet, dass**
der Winkel (α) mindestens oder gleich 90° beträgt.

9. Bauteil nach einem oder mehreren der Ansprüche 1 bis 8,
**dadurch gekennzeichnet, dass**
die Vertiefung (7, 7') mit einem Lot (19) aufgefüllt ist.

10. Bauteil nach einem oder mehreren der Ansprüche 1 bis 9,
**dadurch gekennzeichnet, dass**
die Vertiefung (7, 7') zu einem Teil mit einem Einsatz (16) und zu einem anderen Teil mit einem Lot (19) aufgefüllt oder zugeschweißt ist.

11. Bauteil nach einem oder mehreren der Ansprüche 1 bis 9,
**dadurch gekennzeichnet, dass**
die Vertiefung (7, 7') insgesamt mit einem Schweißmaterial zugeschweißt ist.

12. Bauteil nach einem oder mehreren der Ansprüche 1 bis 11,
**dadurch gekennzeichnet, dass**
die Vertiefung (7, 7') an einer Stelle ausgebildet ist, an der ein Riss (4) vorhanden war.

13. Bauteil nach Anspruch 3,
**dadurch gekennzeichnet,**
**dass** die T-Form einen ersten T-Bereich (T₁) und einen zweiten T-Bereich (T₂) quer zur Verlaufsrichtung (10) mit der jeweiligen Länge (l₁ bzw. l₂) aufweist, dass die Länge (l₁) größer ausgebildet ist als die Länge (l₂), wenn die im Betriebsfall im ersten Bereich (T₁) wirksame Spannung (σ₁) größer ist als die im zweiten Bereich (T₂) wirksame Spannung (σ₂).

14. Bauteil nach Anspruch 4,
**dadurch gekennzeichnet,**
**dass** die H-Form in Querrichtung (11) einen ersten H-Bereich (H₁) mit der Länge (l₁) aufweist,
in dem im Betriebsfall eine erste Spannung (σ1) anliegt und einen zweiten H-Bereich (H₂) mit einer Länge (l₂) in Querrichtung (11),
in dem im Betriebsfall eine zweite Spannung (σ₂) anliegt, und
**dass** die Länge (l₁) größer als (l₂) gewählt ist, wenn die erste Spannung (σ₁) größer ist als die zweite Spannung (σ₂).

15. Bauteil nach Anspruch 1,
**dadurch gekennzeichnet,**
**dass** das erste Material dem zweiten Material entspricht.

16. Bauteil nach Anspruch 1,
**dadurch gekennzeichnet,**
**dass** das erste Material eine andere Mikrostruktur aufweist als das zweite Material.

17. Bauteil nach Anspruch 1, 5 oder 7,
**dadurch gekennzeichnet, dass**
dass das erste Material von dem zweiten Material verschieden ist.

18. Bauteil nach Anspruch 1 oder 15,
**dadurch gekennzeichnet, dass**
das erste Material des Bauteils (1) eine Superlegierung, insbesondere nickel-, kobalt- oder eisenbasiert ist.

19. Bauteil nach Anspruch 1,
ausgebildet als Bauteil einer Turbine, insbesondere einer Gasturbine (100), insbesondere als Turbinenschaufel (120, 130) oder Hitzeschildelement (155).
